# FASCICULE DE BREVET EUROPEEN

(11) **EP 2 356 493 B1**
(45) Date de publication et mention de la délivrance du brevet: **12.04.2017**
(21) Numéro de dépôt: 09801752.8
(22) Date de dépôt: 09.12.2009
(51) Int. Cl.: G01V 1/30

(54) **PROCEDE DE MODELISATION GEOLOGIQUE DE DONNEES SISMIQUES PAR CORRELATION DE TRACES**
VERFAHREN ZUR GEOLOGISCHEN MODELLIERUNG SEISMISCHER DATEN MITTELS SPURKORRELATION
METHOD FOR GEOLOGICALLY MODELING SEISMIC DATA BY TRACE CORRELATION

(30) Priorité: 10.12.2008 FR 0858439
(43) Date de publication de la demande: 17.08.2011
(73) Titulaire: ELIIS, 34170 Castelnau-le-Lez (FR)
(72) Inventeur: PAUGET, Fabien, F-34730 Pradelez (FR); LACAZE, Sébastien, FR/F-34470 Perols (FR); VALDING, Thomas, F-34070 Montpellier (FR)
(74) Mandataire: Rhein, Alain
(86) Numéro de dépôt international: PCT/FR2009/052465
(87) Numéro de publication internationale: WO 2010/067020

(56) Documents cités:
- WO-A1-03/009002
- US-A- 5 056 066
- US-A1- 2004 062 145
- US-A1- 2004 260 476
- US-A1- 2005 171 700
- N.BIENATI ET AL.: "Horizon picking for multidimensional data: an integrated approach" SBGF, 1 août 1999 (1999-08-01), pages 1-2, XP002606786

## Description

### Domaine technique

La présente invention concerne un procédé pour élaborer de façon automatique un modèle géologique à partir de données sismiques. Elle trouve des applications particulièrement pertinentes dans le domaine de l'analyse de données sismiques, notamment lors de la recherche de nouveaux gisements pétroliers.

### Etat de la technique antérieure

D'une façon générale, les données sismiques représentent un sous sol et permettent de ce fait d'appréhender la structure géologique de la zone recouverte. Un signal sismique représente typiquement la dérivée de l'impédance acoustique des couches traversées par des impulsions sonores émises au cours de l'acquisition desdites données sismiques. De ce fait, la sismique est une représentation indirecte et dégradée de la géologie sous jacente. Indirecte car la valeur du pixel n'est pas représentative de la nature même du sous-sol en ce point, et dégradée car la donnée finale est le fruit d'une chaîne de traitements (déconvolution, « stacking process ») qui introduisent des artéfacts et des approximations. Par conséquent, la reconstruction de la géologie à partir de la sismique passe en général par des moyens d'analyse complexes qui cherchent à identifier les couches géologiques une par une et indépendamment les unes des autres. Les méthodes d'analyse existantes utilisent comme postulat qu'une même couche géologique présente des signatures sismiques similaires. Les surfaces sont donc extraites par le biais de propagateurs qui démarrent à partir d'un germe, ou par des classifieurs (Kmean) qui regroupent les signatures sismiques de même calibre. La principale limitation de ces techniques découle du postulat de base lui-même qui n'est jamais vraiment respecté. De plus, les algorithmes employés présentent de nombreux inconvénients: influence trop grande du germe, dérives des propagations, surfaces invalides qui connectent différents étages géologiques...

Plus récemment sont apparues des approches globales qui visent à calculer au cours d'un même processus la totalité du modèle géologique directement à partir des données sismiques. Parmi ces méthodes deux grandes familles se distinguent : celles qui utilisent le pendage local des couches et celles qui utilisent des primitives.

Dans la famille des méthodes utilisant le pendage local des couches, on connaît notamment le document US 6,771,800 de Keskes et al. (2002) qui repose sur la propagation de lignes 2D suivant la direction du pendage. Cette technique ne fonctionne qu'en 2D et ne gère pas les ruptures de continuités de la géologie.

On connaît également le document de Lomask et al., « Flattening without picking », Geophysics vol. 11 no. 4, 2006, pp.13-20, qui propose une méthode de compensation des pendages par un processus itératif de minimisation. Au cours de ce processus, les pendages, obtenus par calcul de gradient 3D sur chaque point sismique, sont peu à peu annulés jusqu'à obtenir un bloc sismique plat, sans déformations globales, qui permet de mettre en évidence les taux de sédimentation par analyse stratigraphique. Cette technique fonctionne en 3D mais la gestion des ruptures du modèle nécessite la connaissance a priori des discontinuités.

Dans la famille de méthodes utilisant des primitives comme éléments de base du modèle géologique, ces éléments sont, dans un premier temps, extraits de l'image sismique et sont ensuite agencés les uns par rapport aux autres pour construire le modèle.

Dans la méthode décrite par Monsen et al. dans le document US 2008/0140319 notamment, les primitives sont des surfaces géologiques de tailles variables obtenues automatiquement par propagation sur les extrema de la sismique. Ces primitives sont ensuite triées par ordre topologique sur la base d'un graphe acyclique (« Directed Acyclic Graph », DAG) qui représente les relations de superposition entre les primitives. L'ordre topologique affecté à chaque surface permet de construire le modèle géologique. Cette méthode fonctionne en 3D, elle gère les discontinuités de type érosion mais ne permet pas la gestion automatique des failles.

Une variante de cette approche est proposée par Verney et al. dans le document « An Approach of Seismic Interprétation Based on Cognitive Vision », 70th EAGE Conference & Exhibition - Rome, Italy, 9 - 12 June 2008. Dans ce document, les relations entre mini surfaces sont hiérarchisées en fonction de leur distance verticale moyenne et que les critères de fusion entre primitives reposent sur des principes provenant de la science cognitive. US5056066 et WO03/009002 décrivent également des procédés d'élaboration de modèles géologiques.

Dans le contexte actuel d'un marché pétrolier de plus en plus concurrentiel et cher, la recherche de nouveaux gisements requiert l'usage d'outils d'analyse automatiques plus précis et rapides. La présente invention a pour but un procédé travaillant à l'échelle du point sismique pour élaborer de manière automatique un modèle géologique à partir de données sismiques, pouvant gérer automatiquement les discontinuités géologiques telles que les failles, et permettant l'implémentation de stratégies multi-échelles.

### Exposé de l'invention

Cet objectif est atteint avec un procédé d'élaboration d'un modèle géologique à partir de données sismiques préalablement collectées, selon la revendication 1.

Le procédé selon l'invention permet ainsi d'élaborer un modèle géologique à partir d'une grille d'échantillonnage arbitraire des données sismiques, en exploitant les similitudes locales des données. En particulier, il ne repose pas sur la détection d'extrema et la propagation de surfaces à partir de ces extrema comme les procédés de l'art antérieur, mais il permet une modélisation plus fine de l'ensemble des données.

Le procédé comprend une étape de remplissage du modèle géologique par propagation d'une mini-surface par similarité dans le voisinage de chaque point d'échantillonnage comprenant un lien, en prenant pour germe ledit point.

Ces mini-surfaces ne doivent toutefois pas être confondues avec les surfaces propagées comme primitives dans des procédés de l'art antérieur. En effet :
- elles ne sont utilisées que pour compléter le modèle géologique, et en particulier les relations topologiques existant entre elles ne sont pas exploitées,
- la forme de leur contour et leur taille sont essentiellement déterminées par la grille d'échantillonnage,
- du fait de leur surface très réduite, les problèmes de dérives liés aux algorithmes de propagation sont négligeables.

Les données d'un volume sismique peuvent être échantillonnées dans un plan sensiblement horizontal selon un maillage sensiblement de l'une quelconque des formes suivantes : rectangulaire, hexagonal, et les traces peuvent être d'orientation sensiblement verticale et comprendre des points d'échantillonnage sensiblement équidistants.

La détermination de liens entre points d'échantillonnage appartenant à des traces différentes comprend une étape de calcul d'images de corrélation,
- chaque image de corrélation correspondant à un couple de traces,
- chaque trace étant représentée selon une dimension de l'image de corrélation, et
- la valeur de chaque point de l'image représentant la corrélation locale des données sismiques au voisinage des deux points respectifs de chaque trace.

Le procédé selon l'invention peut comprendre en outre des étapes de :
- construction de segments dans l'image de corrélation par propagation parmi des points correspondant à des valeurs de corrélation supérieures à au moins un seuil prédéterminé, lesquels segments correspondant à des ensembles de liens ou peignes de corrélations entre points d'échantillonnage des traces ;
- sélection des segments de l'image de corrélation, laquelle sélection ne laissant au plus qu'un segment par ligne et par colonne de l'image de corrélation, correspondant à un seul lien par point d'échantillonnage, et les segments étant sélectionnés sur la base de la valeur des points les constituants, et de leur longueur ;
- validation des liens par l'analyse des chemins constitués par les successions de points reliés par lesdits liens, une condition pour que les liens soient validés étant, dans un volume sismique, que les chemins soient bouclés.

Les étapes de sélection de segments dans l'image de corrélation et de validation des liens sont répétées de manière itérative sur les segments restants dans l'image de corrélation, en utilisant comme contrainte les liens validés aux itérations précédentes, jusqu'à ce qu'il n'y ait plus de segments exploitables.

L'attribution d'un âge géologique relatif aux points d'échantillonnage est un processus itératif exécuté tant qu'il reste des points d'échantillonnage non datés comprenant au moins un lien, qui comprend des étapes de :
- sélection d'un point d'échantillonnage non daté comprenant au moins un lien,
- attribution d'un âge relatif à ce point en tenant compte des points déjà datés de sa trace, de telle sorte que l'âge le long d'une trace varie toujours dans le même sens, et
- attribution du même âge relatif à tous les points reliés à ce point par des liens.

Le procédé selon l'invention peut comprendre en outre une étape de normalisation des âges relatifs, l'incrément d'âge entre points d'âge relatif consécutifs étant fixé à une valeur prédéfinie.

Suivant un autre aspect du procédé selon l'invention, un modèle géologique multi-échelles peut être élaboré en fusionnant des ensembles de liens entre points d'échantillonnage, lesquels ensembles de liens étant obtenus avec des grilles d'échantillonnage différentes.

Avantageusement, le procédé selon l'invention peut être appliqué de manière automatisée, notamment :
- à l'extraction directe des surfaces de dépôt sur la base d'iso-valeurs,
- à l'horizontalisation de la sismique en cartographiant sur une ligne ou un plan le signal sismique correspondant à un étage géologique,
- à l'analyse de failles, et
- à l'analyse de chenaux,

Suivant un autre aspect de l'invention, il est proposé un programme d'ordinateur selon la revendication 13 mettant en oeuvre le procédé suivant l'invention.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre la construction de l'image de corrélation correspondant à deux traces de l'ensemble des données sismiques. La figure la illustre l'échantillonnage vertical des données en traces sismiques tandis que la figure 1b illustre la construction de l'image de corrélation ;
- la figure 2b illustre le peigne de corrélation correspondant à une géologie dite iso pack avec des variations de pendage telle que illustrée à la figure 2a ;
- la figure 3b illustre le peigne de corrélation correspondant à une géologie présentant à la fois des variations de pendage et d'épaisseur telle que illustrée à la figure 3a ;
- la figure 4 illustre l'établissement des peignes de corrélation entre points de part et d'autres d'une faille présentant un rejet normal (figure 4a) ou inverse (figure 4b) ;
- la figure 5 illustre un processus d'extraction des segments de droite de forte intensité dans l'image de corrélation ;
- la figure 6 illustre des exemples de stratégies d'échantillonnage du cube sismique ;
- la figure 7 illustre la validation des peignes de corrélation par analyse des chemins ;
- la figure 8 illustre le principe de l'insertion itérative de peignes de corrélation pour remplir l'espace des données ;
- la figure 9 illustre un exemple d'application de l'algorithme de calcul des positions de référence ;
- La figure 10 illustre un exemple de mini-surfaces obtenues dans une grille d'échantillonnage carrée ;
- la figure 11 illustre le remplissage du modèle géologique ;

Le procédé selon l'invention exploite un ensemble de données sismiques pour en déduire un modèle géologique, et ceci en travaillant à l'échelle des points sismiques.

Les données telles que décrites dans le mode de mise en oeuvre préférentiel font référence à un cube ou volume 3D de données sismiques. Le procédé selon l'invention peut toutefois également être mis en oeuvre sur un ensemble de données sismiques bidimensionnel, tels que des coupes.

Le volume de données sismiques peut être caractérisé par 3 axes, soit respectivement des axes **Inline** et **Xline** sensiblement parallèles à la surface du sol et un axe **TWT** orienté dans le sens des profondeurs croissantes.

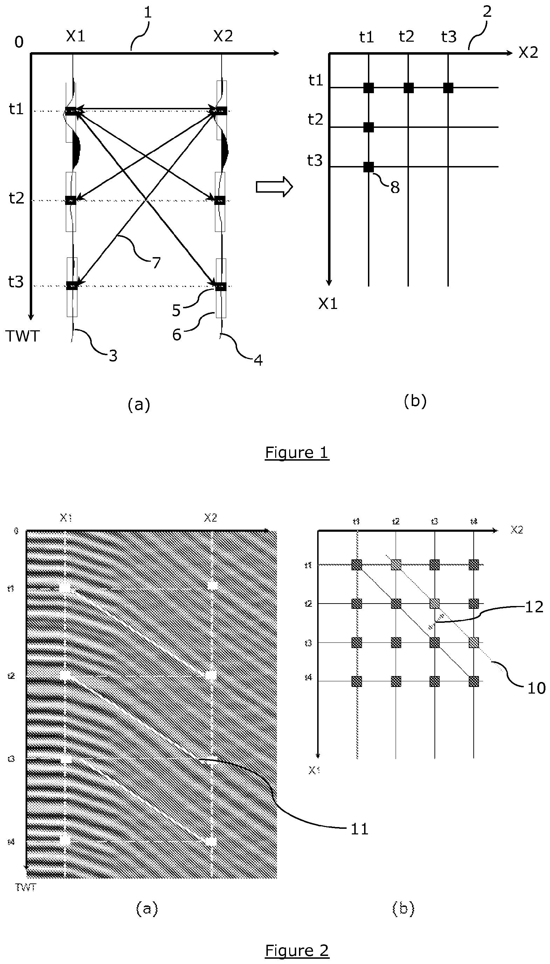

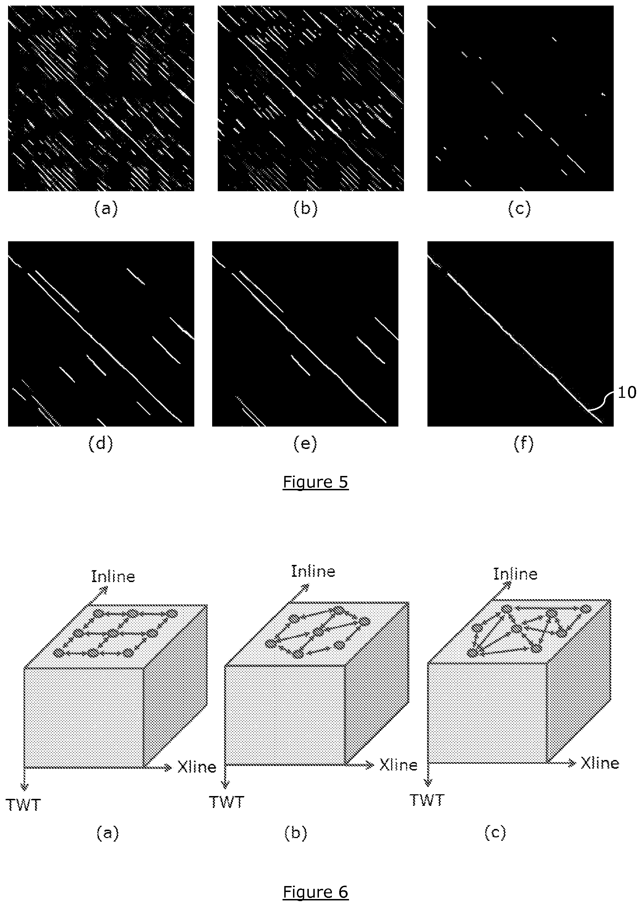

Le procédé selon l'invention peut être appliqué à la totalité des données du volume sismique, mais dans le cas général il est suffisant de se limiter à un sous ensemble de points échantillonnés pour limiter notamment le temps de calcul. En référence à la figure 1, une trace sismique ou trace 3, 4 comprend un ensemble de points 5 sensiblement alignés et équidistants, échantillonnés aux profondeurs **t1, t2, t3,** ... dans la direction de l'axe **TWT.** La totalité du volume sismique peut être échantillonné par un ensemble de traces disposées dans le plan **Inline-Xline** selon un maillage par exemple carré, hexagonal, voire arbitraire, tel qu'illustré à la figure 6.

En référence à la figure 1, une première étape du procédé selon l'invention consiste à calculer pour un ensemble des couples de traces (3, 4) d'intérêt extrait des données sismiques 1 une image de corrélation **I(X1, X2), X1** et **X2** étant les positions respectives des traces sismiques 3, 4. Cette image de corrélation 2 représente l'ensemble des coefficients de corrélations calculés entre les **N1** points provenant de **X1** et les **N2** points provenant de **X2.** Dans cette image de dimensions **(N1*N2)** pixels, si **X1** est en ordonnée et **X2** en abscisse, la valeur du point **P(i, j)** situé à la colonne **i** et à la ligne **j** est le coefficient de corrélation **Cf(i, j)** calculé entre le ième point de la trace **X2** et le **j**ème point de la trace **X1.**

Les coefficients de corrélation **Cf(i, j)** peuvent être calculés par exemple à partir de la corrélation d'une mini trace **Vi** de taille **S,** centrée autour d'un point X2(i) et d'une mini trace sismique **Vj** de taille **S** centrée autour d'un point **X1(j).** Le mode de calcul des coefficients **Cf(i, j)** peut également et de manière non limitative comprendre tout type de calcul de distance ou de différences entre les deux vecteurs **Vi** et **Vj.**

Dans la figure 1 par exemple, la valeur du point 8 de l'image de corrélation 2 est le résultat du calcul de la corrélation entre la mini trace 6 autour du point 5, de position **t3** dans la trace **X2** avec la mini trace autour du point de position **t1** de la trace **X1.** Par une convention non limitative, le mode de calcul de la valeur des points de l'image de corrélation 2 est défini de telle sorte que cette valeur augmente avec la similitude des vecteurs **Vi** et **Vj.**

Chaque point de l'image de corrélation **I(X1, X2)** tel que 8 correspond donc à un lien, par exemple 7, entre un point de la trace **X1** et un point de la trace **X2.** Un point qui présente une forte valeur dans **I(X1, X2)** représente un lien de forte probabilité entre **X1** et **X2.** L'image de corrélation met donc en évidence tous les liens de forte probabilité entre deux traces sismiques. En référence à la figure 2, lorsque les points de forte probabilité sont contigus dans l'image de corrélation 2, leur pertinence augmente car ils ne sont plus isolés dans le contexte géologique mais forment un ensemble consistant 10 qui lie deux étages géologiques. Ces ensembles contigus correspondent à des peignes de corrélation 11 dans l'espace des données 1, lesquels peignes sont définis par les ensembles **E** de points **P(i, j)** de l'image **I(X1, X2)** tels qu'aucun point **P(i j)** de **E** ne présente la même abscisse ni la même ordonnée qu'un des autres points de **E.** Cette propriété traduit le fait que dans un peigne donné, un point sismique n'est connecté qu'à un seul lien.

Dans le cas d'une géologie complètement laminaire à pendage nul, les traces **X1** et **X2** sont similaires et le segment de plus forte corrélation se situe sur la diagonale de l'image 2, avec un coefficient directeur sensiblement égal à 1. Le peigne résultant comprend alors des liens horizontaux.

Dans le cas d'une géologie dite iso pack avec des variations de pendage telle qu'illustrée à la figure 2, les deux traces **X1** et **X2** présentent des signatures similaires mais sont décalées. Le segment de plus forte corrélation 10 est alors parallèle à la diagonale, avec un coefficient directeur sensiblement égal à 1, et la distance 12 entre la diagonale et le segment représente la valeur du rejet, c'est-à-dire du décalage suivant l'axe **TWT,** entre **X1** et **X2.**

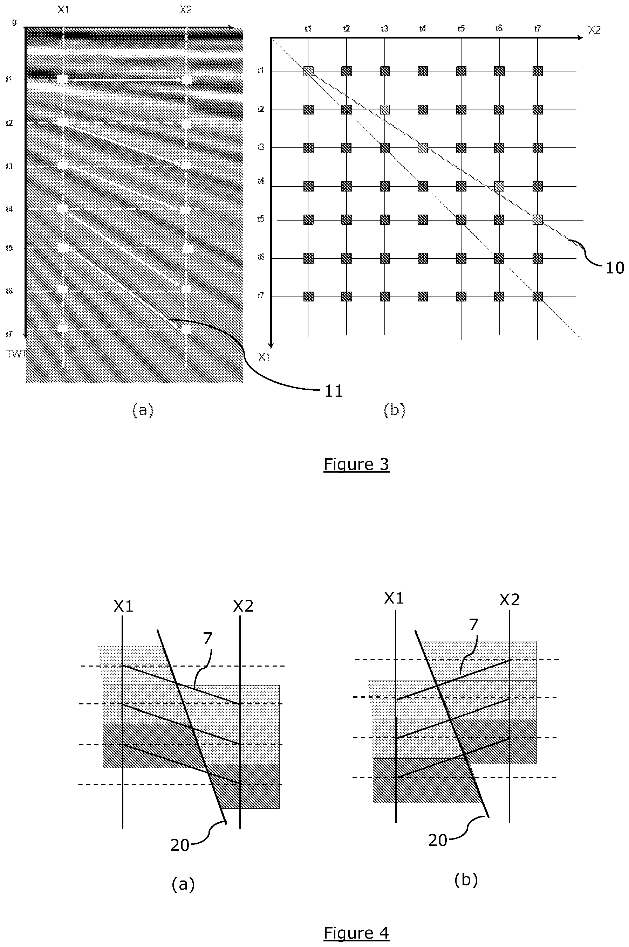

De même, dans le cas plus général où la géologie présente à la fois des variations de pendage et d'épaisseur, tel qu'illustré à la figure 3, le segment de plus forte corrélation 10 possède un coefficient de direction différent de 1 car le rejet varie le long du peigne 11.

Avantageusement, le procédé selon l'invention n'est pas sensible à la présence de failles, contrairement aux méthodes de propagation utilisées dans l'art antérieur pour obtenir des surfaces sismiques et des primitives. En utilisant la méthode des peignes de corrélation, des relations ou liens 7 entre les points peuvent être établies de part et d'autre de la faille 20, quelque soit la valeur et le sens (normal ou inverse) du rejet, tel qu'illustré à la figure 4.

Les peignes 11 peuvent être détectés automatiquement en extrayant des segments de droite 10 de forte intensité de l'image de corrélation **I(X1, X2).** Cette détection peut avantageusement être réalisée par exemple sur la base d'un algorithme comprenant les étapes suivantes, illustrées aux figures 5a à 5f, respectivement :
- classification des points de l'image **I(X1, X2)** en trois familles : **INVALID, VALID** et **INCERTAIN** en fonction de leur valeur de corrélation (figure 5a) ;
- utilisation de tous les points classés **VALID** comme germe pour propager des segments. Les points candidats pour les propagations sont uniquement les points classés **VALID** et **INCERTAIN** (figure 5b) ;
- recherche de tous les points de **I(X1, X2)** qui présentent la valeur maximale sur une ligne ou sur une colonne. Ces points sont marqués **MAXP** (figure 5c) ;
- élimination des segments qui ne contiennent aucun point marqués **MAXP** (figure 5d) ;
- élimination des segments dont la longueur est inférieure à la longueur médiane des segments obtenus dans l'étape précédente (figure 5e) ;
- présentation de chaque segment en partant du plus long au plus court.
Chaque segment présenté élimine tous les segments qui ont un point sur la même ligne ou sur la même colonne de l'image de corrélation (figure 5f). On obtient ainsi le plus long segment 10 correspondant au plus long peigne 11 en s'assurant que les points sismiques du peigne 11 ne sont associés qu'à un seul lien.

Pour détecter les peignes 11 sur l'ensemble des données du bloc sismique, il faut choisir des positions de couples de traces **X1** et **X2** à partir desquels une image de corrélation est calculée. Ces traces peuvent être positionnées n'importe où dans le bloc sismique. Si les capacités machines le permettent, on peut utiliser toutes les traces du cube sismique et donc tous les points. Cependant, en règle générale, un échantillonnage du cube sismique est nécessaire.

Avantageusement, on peut opter pour une stratégie d'échantillonnage régulière dans laquelle on prend une trace sur **N** traces possibles et on calcule toutes les images **I(Xi, Xj)** tel que les positions **Xi** et **Xj** soient distantes de **N,** suivant par exemple un maillage sensiblement carré ou hexagonal (figures 6a et 6b). On peut aussi mettre en oeuvre une stratégie aléatoire dans laquelle tous les couples **(Xi, Xj)** sont tirés aléatoirement (figure 6c). On peut également avantageusement combiner plusieurs stratégies, la seule finalité étant d'obtenir un nombre suffisant de peignes 11 pour que l'essentiel du bloc sismique soit caractérisé.

Cette souplesse d'usage confère au procédé selon l'invention un avantage considérable car elle permet de mettre en oeuvre facilement des stratégies multi-échelles, ou multi-résolutions, en combinant par exemple des peignes distants de **N** échantillons avec des peignes distants de **2*N** échantillons. L'utilisation des peignes à plusieurs échelles ou niveaux de résolution permet de mieux traiter par exemple des facteurs géologiques à grande échelle tels que des zones de failles ou d'érosion.

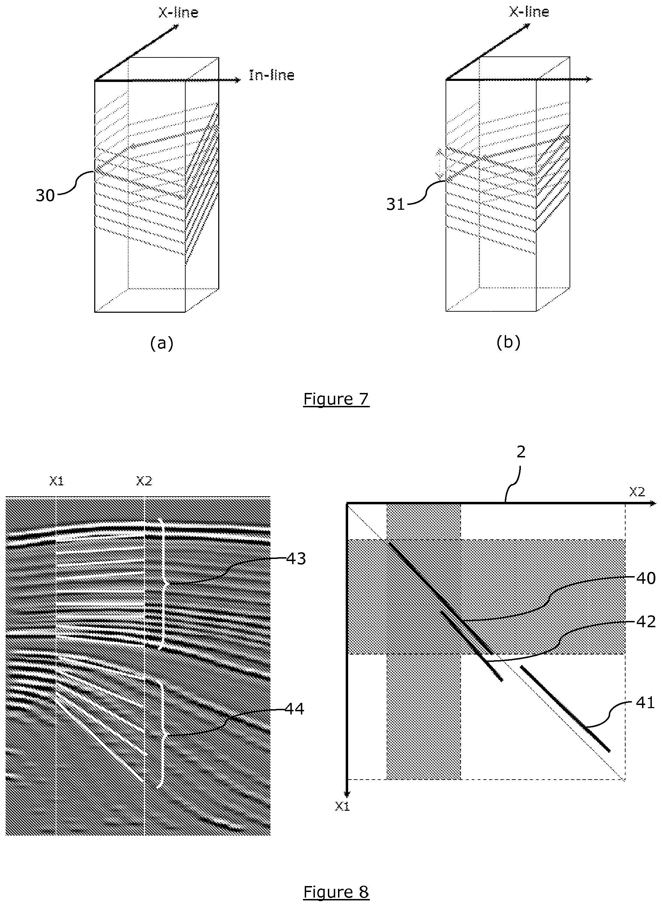

Avantageusement, le procédé selon l'invention peut comprendre une étape de validation des liens, sur la base d'une analyse des chemins constitués par les suites de points sismiques reliés entre eux par ces liens. En effet, dans la mesure où un lien relie par définition des points qui se situent sur une même surface géologique, en parcourant un chemin de lien en lien on doit normalement rester sur la même surface. Si un chemin ne se reboucle pas sur lui même il est rejeté car il n'y a aucune certitude au regard de sa pertinence. Si un chemin comprend deux points différents appartenant à une même trace 31, tel qu'illustré à la figure 7b, il n'est également pas validé car il traverse différents étages géologiques lors de son parcours. Si, au contraire, le chemin revient exactement au point de départ 30 sans recouvrement (figure 7a), il est validé car la probabilité qu'il soit sur la même surface est forte. Lorsqu'un chemin est validé, tous des liens qui le composent sont également validés. De même, lorsqu'un certain nombre de liens est validé dans un peigne, la totalité du peigne est validé car on considère que les peignes sont des ensembles indissociables et pertinents.

Bien que ce critère de validation des liens soit exigeant, il permet de remplir l'espace sismique par des peignes ayant une consistance géologique. Avec cette technique un lien valide peut parcourir des surfaces géologiques présentant de fortes variations de pendage et traversées par des failles.

Il peut être avantageusement mis en oeuvre dans le procédé selon l'invention un processus itératif pour remplir au maximum le volume sismique étudié, de telle sorte à bâtir un modèle final le plus complet possible avec le maximum de liens. Chaque itération de ce processus comprend une détection puis une validation d'un ensemble de peignes tels que cela est décrit précédemment. Chaque nouvelle itération est contrainte par les itérations précédentes. L'espace sismique se remplissant peu à peu, le nombre de possibilités d'insertion de nouveaux peignes diminue.

Soit un couple **(X1, X2)** de deux traces. Si au cours de la première itération, un peigne a été validé entre **X1** et **X2,** ce dernier servira de contrainte pour l'itération suivante car il limite le champ de solutions disponibles pour un second peigne. Ce principe est illustré à la figure 8. Dans cette figure, les segments correspondant à trois peignes pertinents sont présents dans l'image de corrélation. Le segment 40 correspondant au peigne 43, le plus évident, est validé lors de la première itération. Pour la seconde itération, toute la partie grisée de l'image n'est plus disponible conformément au principe selon lequel il ne peut y avoir qu'un lien par couple de points. Par conséquent, le segment 42, dont une trop grande partie des liens recouvre dans la zone grisée, est éliminé de la liste des candidats. Seul le segment 41 correspondant au peigne 44 reste disponible.

Les premiers peignes valides se positionnent sur la sismique de bonne qualité, qui présente les meilleures corrélations. Ces peignes vont ensuite servir de contrainte pour la deuxième vagues de peignes, lors de la deuxième itération, qui va utiliser l'espace disponible avec une sismique de moins bonne qualité. Ainsi, la contrainte géologique apportée par les liens existants va s'enrichir peu à peu de façon à compenser la perte graduelle de qualité de la sismique qui reste non traitée. Avantageusement, l'espace est peu à peu recouvert même dans les zones présentant un faible rapport signal/bruit. Une condition d'arrêt du processus itératif peut être par exemple l'absence de nouveaux peignes détectés.

Le procédé selon l'invention permet ainsi de remplir l'espace des données de peignes de corrélations reliant les points des couples de traces **(Xi, Xj).** Soit **Ep,** l'ensemble des points sismiques qui se situent sur tous les couples **(Xi, Yj).** Avantageusement, il est possible d'affecter à chaque point **P** de **Ep** une position de référence calculée avec les liens validés et qui traduit la position de **P** dans le contexte géologique. Cette position de référence permet d'établir une hiérarchie des points **P,** du plus jeune au plus ancien. Ce calcul peut être effectué par exemple sur la base de l'algorithme suivant :

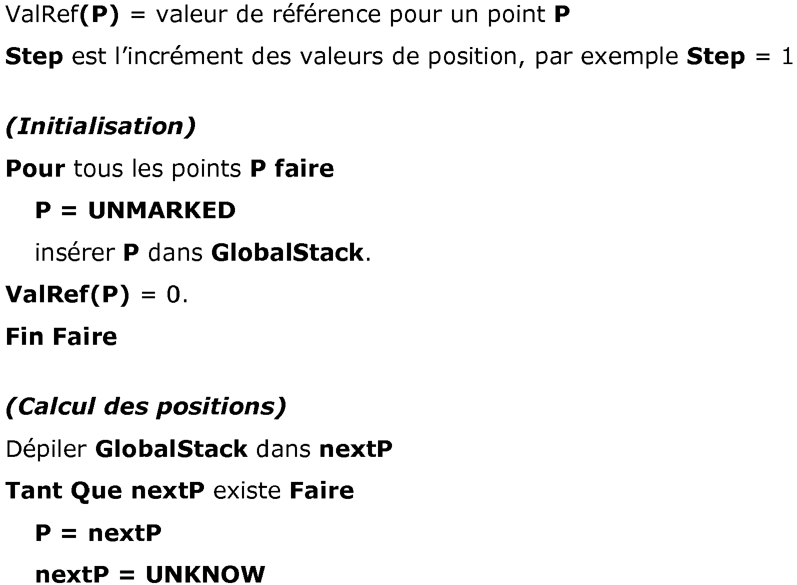

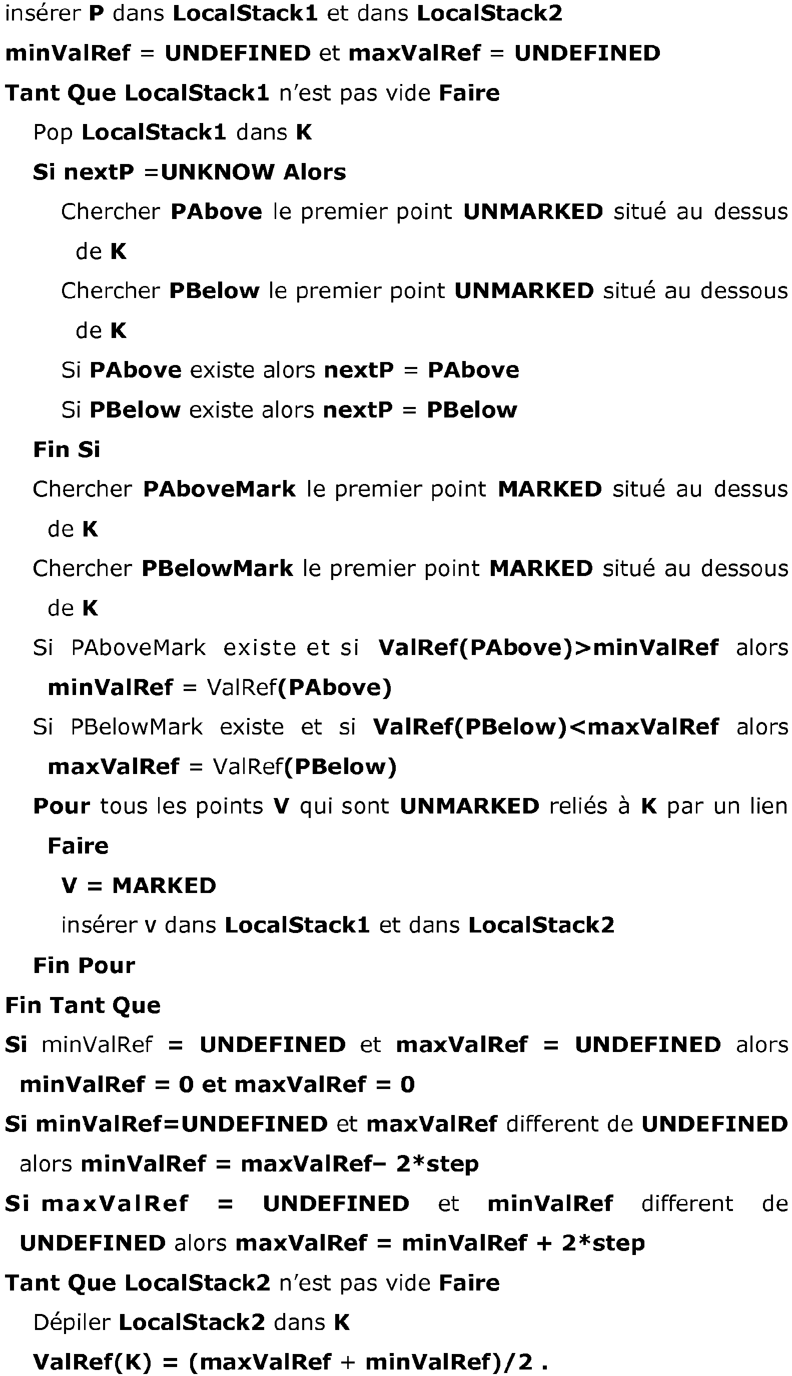

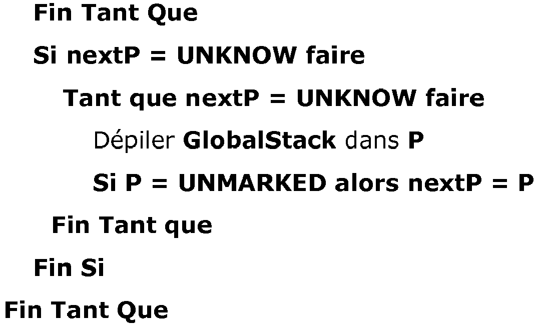

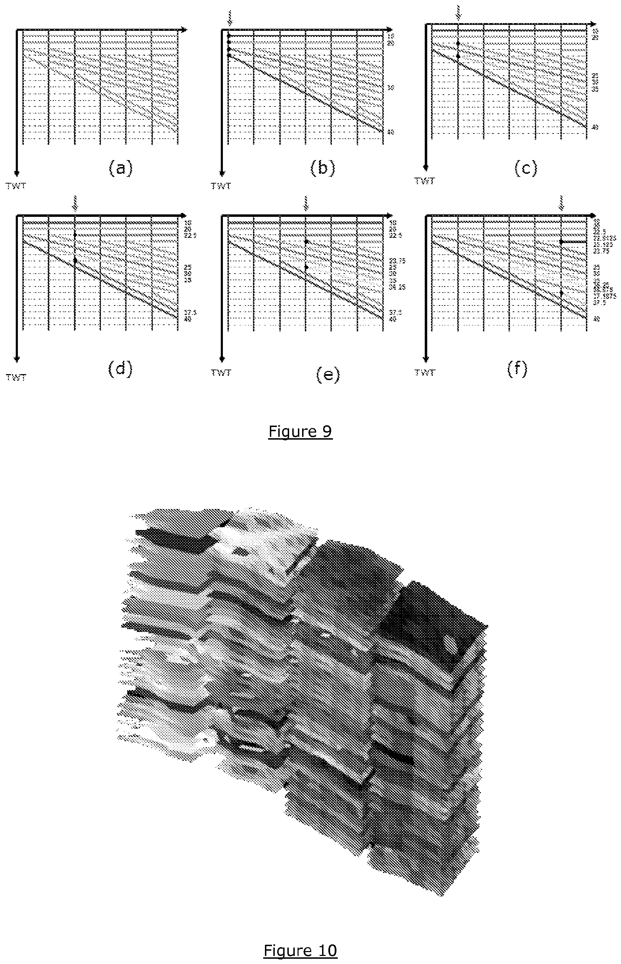

Cet algorithme est rapide puisque chaque point **P** n'est visité qu'une seule fois. La figure 9 illustre le processus de calcul des positions de référence sur un cas ou l'épaisseur varie de droite à gauche. Dans cet exemple, le pas d'incrément est égal à 10. La figure montre, respectivement, (a) l'ensemble de liens dans le cas d'une variation d'épaisseur, (b) l'initialisation des positions sur la première trace avec un incrément de 10, (c, d, e et f), le calcul des positions relatives sur chacun des liens vierges, par rapport aux liens inférieur et supérieur.

Les positions de références constituent une échelle de temps arbitraire dans laquelle les points de la sismique sont positionnés les uns par rapport aux autres. Avantageusement, il est possible en parcourant cette échelle de temps du plus récent au plus ancien, de normaliser l'âge relatif des points de façon à ce que la variation de positions entre deux points consécutifs dans l'échelle de temps soit constante.

A ce stade, seule une partie des points de la sismique possède une position de référence : c'est l'ensemble **Ep** des points qui comprennent un lien valide. Le nombre de points dépend du nombre de peignes de corrélation détectés qui lui-même dépend de l'échantillonnage effectué pour positionner les couples de traces **(X1, X2).** Pour remplir tout l'espace sismique avec des positions de référence, on peut avantageusement construire des petites surfaces dont la forme et la topologie dépendent du signal sismique et du type d'échantillonnage qui à été choisit. Chaque point référencé dans **Ep** peut servir de germe **G** pour calculer une mini surface sur la base d'un algorithme classique de propagation par similarité de mini trace sismique. L'étendue spatiale de cette mini surface se limite avantageusement à la « cellule de Voronoi » associée au germe **G.** La définition d'une cellule de Voronoi est la suivante : Soit **E** un ensemble de points et **S** un sous ensemble de **E (S** est un échantillonnage de **E).** Si **P** est un point de **S,** la cellule de Voronoi associée au point **P** est l'ensemble des points présents dans **E** qui sont plus proches de **P** que de tous les autres points du sous ensemble **S.**

Dans le cas du procédé selon l'invention, l'ensemble **E** peut représenter tous les points de la surface du bloc sismique et **S** les positions des traces **Xi,** utilisées pour calculer les images de corrélation.

Avantageusement, tous les points d'une mini surface propagée à partir d'un germe **G** se voient attribuer la position de référence associée à **G.** Cette technique permet de remplir tout l'espace en respectant les variations de pendage local. Il est à noter que, contrairement aux procédés de l'art antérieur, la méthode ne se limite pas aux extrema de la sismique mais une mini-surface est créée pour chaque point comprennent un lien valide. De même, par comparaison avec les procédés de l'art antérieur qui utilisent des surfaces propagées comme primitives, les mini-surfaces calculées dans le procédé selon l'invention présentent des caractéristiques très particulières :
- la forme de leur contour et leur taille sont essentiellement déterminées par la grille d'échantillonnage,
- du fait de leur surface très réduite, les problèmes de dérives liés aux propagations sont négligeables,
- elles ne sont utilisées que pour compléter le modèle, et en particulier les relations topologiques existant entre elles ne sont pas exploitées.

La figure 10 montre un exemple de mini-surfaces obtenues dans une grille d'échantillonnage carrée.

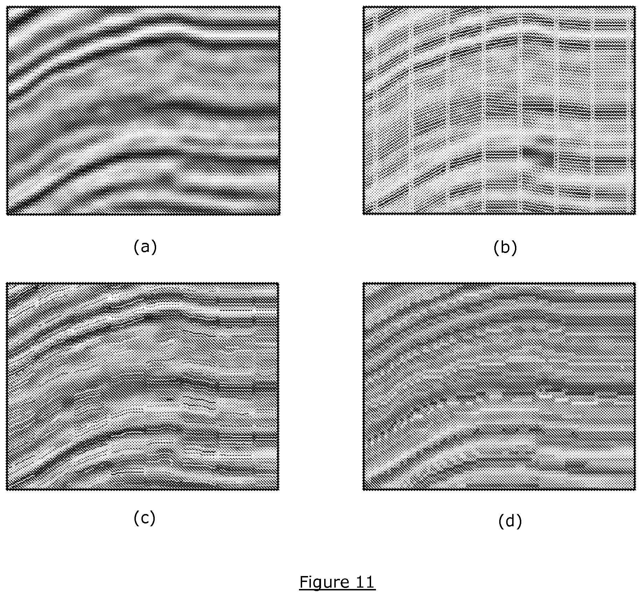

Le remplissage du modèle géologique est illustré à la figure 11, (a) : image sismique, (b) : ensemble des liens validés, (c) : mini surfaces propagées à partir des points connectés aux liens validés, (d) : positions de référence obtenues pour chaque point de l'image (a).

Selon des caractéristiques avantageuses du procédé selon l'invention,
- les modèles obtenus sont très précis car les primitives de référence sont les points sismiques. Dans les procédés de l'art antérieur qui utilisent des surfaces comme primitives, la modélisation réelle n'est possible que sur les extrema, le reste de l'information étant obtenu par interpolation verticale entre les extrema. Dans le procédé selon l'invention aucune interpolation n'est requise, ce qui permet moins d'approximation et donc plus de précision ;
- dans les approches de l'art antérieur basées sur des primitives, une surface est indivisible, c'est un ensemble de points indissociables qui ont toujours la même valeur dans le modèle géologique. Cette rigidité écarte toute possibilité de contrôle du modèle au sein d'une même surface. La qualité du modèle est donc tributaire de la qualité d'extraction des primitives. Dans le procédé selon l'invention le modèle peut être contraint en tout point de l'espace sismique en ajoutant simplement un lien. Le modèle conserve toute sa souplesse et le contrôle peut se faire sans limitation ;
- il peut être intéressant de combiner plusieurs échelles d'analyse dans l'interprétation des données sismiques. Par exemple, on peut mixer une analyse locale qui s'intéresse aux petites variations du signal sismique avec une analyse plus globale qui regarde les grands événements tel que les forts rejets de failles ou les variations d'épaisseur. Avec les méthodes de modélisation de l'art antérieur, l'usage de plusieurs échelles au sein d'un seul et même calcul est très difficile à mettre en oeuvre, contrairement au procédé selon l'invention dans lequel il suffit de faire varier les distances entre les traces sur lesquelles les images de corrélation sont calculées ;
- les peignes de corrélations utilisés dans le procédé selon l'invention peuvent trouver des liens entre les couches géologiques situées de part et d'autre des failles et ce quelque soit l'amplitude et le sens du rejet. Le procédé selon l'invention permet ainsi de mieux gérer les discontinuités géologiques que les autres méthodes de l'art antérieur tributaires d'une analyse locale telle que la propagation ou le calcul local du pendage.

Le procédé selon l'invention peut avantageusement être appliqué à des analyses automatiques de paramètres géologiques tels que :
- l'extraction directe des surfaces de dépôts sur la base d'iso-valeur. Le procédé selon l'invention permet un gain de temps important car il permet de s'affranchir du processus d'extraction manuelle par pointé qui est extrêmement long et pénible. Les surfaces obtenues sont une source d'information très riche, car elles constituent l'élément fondamental et premier pour de nombreux systèmes et méthodes d'analyse de la géologie ;
- l'horizontalisation de la sismique qui consiste à cartographier sur une ligne ou sur un plan horizontal le signal sismique correspondant à un étage géologique. En traitant ainsi plusieurs étages successifs on arrive à reconstruire une sismique dite redressée dans laquelle tous les reliefs des dépôts géologiques sont aplanis. Le procédé selon l'invention est avantageusement mis en oeuvre pour ce genre d'applications, très utilisées dans la recherche d'hydrocarbures notamment, car le relief de chaque surface est alors connu avec de surcroît une très bonne précision et une grande fiabilité ;

- l'analyse des failles qui sont des glissements des couches géologiques le long d'une surface de fracturation. Cette fracturation engendre une rupture de continuité des dépôts géologiques qui, en sismique, se traduit par une perturbation du signal. Ainsi, dans l'image de modélisation géologique résultante la présence d'une faille se traduira par des variations brutales des valeurs topologiques qui se déclinent le long de surfaces. Ces deux critères rendent possible l'extraction des failles sous forme de surfaces vectorisées et aussi de cartographie l'ampleur du rejet le long des failles ;
- l'analyse des chenaux qui sont des anciens lits de rivières terrestres ou sous-marines comblés par des sédiments. En exploration pétrolière, ces chenaux constituent des cibles privilégiées car présentent toutes les caractéristiques des pièges à hydrocarbures. Les phénomènes de creusement et de remplissage des lits d'écoulement sont rapides à l'échelle géologique et se traduisent, dans l'image de modélisation géologique obtenue par l'application du procédé selon l'invention, par des variations d'épaisseur brutales des étages géologiques sous forme de lentilles. Ces caractéristiques morphologiques sont assez discriminantes pour envisager une cartographie tridimensionnelle automatique des chenaux.

Bien sûr, l'invention n'est pas limitée aux exemples qui viennent d'être décrits et de nombreux aménagements peuvent être apportés à ces exemples sans sortir du cadre de l'invention.

## Revendications

1. Procédé d'élaboration d'un modèle géologique ,mis en oeuvre par ordinateur, à partir de données sismiques préalablement collectées, **caractérisé en ce qu'**il comprend des étapes de :
- échantillonnage desdites données sismiques (1) selon au moins un ensemble de traces sismiques (3,4) constituées chacune de points d'échantillonnage (5) échantillonnés selon des profondeurs croissantes,
- analyse de similitudes entre les données sismiques (6) autour desdits points d'échantillonnage (5) appartenant à des traces sismiques différentes (3, 4),
- détermination de liens (7) entre points d'échantillonnage (5) appartenant à des traces différentes à partir de ladite analyse de similitudes, lesquels liens reliant des points qui se situent sur une même surface géologique, ladite détermination comprenant une étape de calcul d'images de corrélation (2) :
- chaque image de corrélation correspondant à un couple de traces (3, 4),
- chaque trace étant représentée selon une dimension de l'image de corrélation (2), et
- la valeur de chaque point de l'image (2) représentant la corrélation locale des données sismiques (6) au voisinage des deux points (5) respectifs de chaque trace (3,4),
**caractérisé en ce qu'**il comprend une étape de :
- constitution dudit modèle géologique en attribuant à chaque point d'échantillonnage (5) un âge géologique relatif qui est calculé au moins à partir :
(i) de l'âge géologique relatif d'autres points d'échantillonnage reliés audit point d'échantillonnage (5) par des liens (7), et
(ii) de l'âge géologique relatif d'autres points d'échantillonnage voisins de la trace (4) incluant ledit point d'échantillonnage (5),
l'attribution d'un âge géologique relatif aux points d'échantillonnage (5) est un processus itératif exécuté tant qu'il reste des point d'échantillonnage non daté (5) comprenant au moins un lien (7), qui comprend des étapes de :
- sélection d'un point d'échantillonnage non daté (5) comprenant au moins un lien (7),
- attribution d'un âge relatif à ce point (5) en tenant compte des points déjà datés de sa trace (4), de telle sorte que l'âge le long d'une trace varie toujours dans le même sens, et
- attribution du même âge relatif à tous les points reliés à ce point par des liens (7) et ce qu'il comprend encore une étape de remplissage du modèle géologique par propagation d'une mini surface par similarité dans le voisinage de chaque point d'échantillonnage (5) comprenant un lien (7), en prenant pour germe ledit point (5).

2. Procédé selon la revendication 1, **caractérisé en ce que** :
- les données d'un volume sismique (1) sont échantillonnées dans un plan sensiblement horizontal, à savoir selon un plan comprenant des axes (Inline et Xline) parallèles à la surface du sol ; selon un maillage de l'une quelconque des formes suivantes : carrée, hexagonale, voire arbitraire ; et
- les traces (3, 4) sont d'orientation sensiblement verticale, à sa voir selon la direction d'un axe (TWT) orienté dans le sens des profondeurs croissantes, et comprennent des points d'échantillonnage (5) sensiblement alignés et équidistants, à savoir qu'ils sont échantillonnés à des profondeurs (t1, t2, t3, ...) dans la direction dudit axe (TWT).

3. Procédé selon la revendication 1, **caractérisé en ce qu'**il comprend une étape de construction de segments (10) dans l'image de corrélation (2) par propagation parmi des points (8) correspondant à des valeurs de corrélation supérieures à au moins un seuil prédéterminé, lesquels segments (10) correspondant à des ensembles de liens ou peignes de corrélations (11) entre points d'échantillonnage (5) des traces (3, 4).

4. Procédé selon la revendication 3, **caractérisé en ce qu'**il comprend une étape de sélection des segments (10) de l'image de corrélation (2),
- laquelle sélection ne laissant au plus qu'un segment (10) par ligne et par colonne de l'image de corrélation (2), correspondant à un seul lien (7) par point d'échantillonnage (5), et
- les segments (10) étant sélectionnés sur la base de la valeur des points (8) les constituants, et de leur longueur.

5. Procédé selon la revendication 4, **caractérisé en ce qu'**il comprend une étape de validation des liens (7) par l'analyse des chemins (30, 31) constitués par les successions de points (5) reliés par lesdits liens (7), une condition pour que les liens (7) soient validés étant, dans un volume sismique, que les chemins soient bouclés (30).

6. Procédé selon la revendication 5, **caractérisé en ce que** les étapes de sélection de segments (10) dans l'image de corrélation (2) et de validation des liens (7) sont répétées de manière itérative sur les segments restants (41, 42) dans l'image de corrélation (2), en utilisant comme contrainte les liens validés (40) aux itérations précédentes, jusqu'à ce qu'il n'y ait plus de segments exploitables.

7. Procédé selon la revendication 1,
**caractérisé en ce qu'**il comprend une étape de normalisation des âges relatifs, l'incrément d'âge entre points (5) d'âges relatifs consécutifs étant fixé à une valeur prédéfinie.

8. Procédé selon l'une quelconque des revendications précédentes, **caractérisé en ce qu'**un modèle géologique multi-échelles est élaboré en fusionnant des ensembles de liens entre points d'échantillonnage, lesquels ensembles de liens étant obtenus avec des grilles d'échantillonnage différentes.

9. Procédé selon l'une quelconque des revendications précédentes, **caractérisé en ce qu'**il est appliqué à l'extraction directe des surfaces de dépôt sur la base d'isovaleurs.

10. Procédé selon l'une quelconque des revendications 1 à 8, **caractérisé en ce qu'**il est appliqué à l'horizontalisation de la sismique en cartographiant sur une ligne ou un plan le signal sismique correspondant à un étage géologique.

11. Procédé selon l'une quelconque des revendications 1 à 8, **caractérisé en ce qu'**il est appliqué à l'analyse de failles.

12. Procédé selon l'une quelconque des revendications 1 à 8, **caractérisé en ce qu'**il est appliqué à l'analyse de chenaux.

13. Programme d'ordinateur mettant en oeuvre toutes les étapes du procédé selon l'une quelconque des revendications précédentes.

## Patentansprüche

1. Computer-implementiertes Verfahren zur Herstellung eines geologischen Modells ab vorher gesammelten seismischen Daten, **dadurch gekennzeichnet, dass** es folgende Schritte umfasst:
- Abtasten der besagten seismischen Daten (1) nach zumindest einem Satz von seismischen Spuren (3, 4), die jeweils aus bei zunehmenden Tiefen abgetasteten Abtastpunkten (5) bestehen,
- Analysieren der Ähnlichkeiten zwischen den seismischen Daten (6) um die Abtastpunkte (5) herum, die zu unterschiedlichen seismischen Spuren (3, 4) gehören,
- Bestimmen, aufgrund der besagten Analyse der Ähnlichkeiten, von Verbindungen (7) zwischen Abtastpunkten (5), die zu unterschiedlichen Spuren gehören, wobei diese Verbindungspunkte Punkte verbinden, die sich auf einer gleichen geologischen Oberfläche befinden, wobei die besagte Bestimmung einen Schritt des Berechnens von Korrelationsbildern (2) umfasst:
- wobei jedes Korrelationsbild einem Paar von Spuren (3, 4) entspricht,
- wobei jede Spur nach einer Abmessung des Korrelationsbildes (2) dargestellt wird, und
- wobei der Wert jedes Bildpunkts (2) die lokale Korrelation der seismischen Daten (6) in der Nähe der beiden jeweiligen Punkte (5) jeder Spur (3, 4) darstellt,
**dadurch gekennzeichnet, dass** es einen Schritt umfasst:
- des Bildens des besagten geologischen Modells dadurch, dass jedem Abtastpunkt (5) ein relatives geologisches Alter zugewiesen wird, das mindestens ab Folgendem errechnet wird:
(i) dem relativen geologischen Alter von anderen Abtastpunkten, die durch Verbindungen (7) mit dem besagten Abtastpunkt (5) verbunden sind, und
(ii) dem relativen geologischen Alter von anderen Abtastpunkten, die der Spur (4), die den besagten Abtastpunkt (5) umfasst, benachbart sind,
wobei die Zuweisung eines relativen geologischen Alters an den Abtastpunkten (5) ein iterativer Prozess ist, solange undatierte Abtastpunkte (5) vorhanden sind, die zumindest eine Verbindung (7) umfassen, das die Schritte umfasst:
- des Auswählens eines undatierten Abtastpunktes (5), der mindestens eine Verbindung (7) umfasst,
- des Zuweisens eines relativen Alters an diesem Punkt (5) unter Berücksichtigung der bereits datierten Punkte seiner Spur (4), sodass das Alter entlang einer Spur sich immer in der gleichen Richtung ändert, und
- des Zuweisens des gleichen relativen Alters an allen Punkten, die durch Verbindungen (7) mit diesem Punkt verbunden sind, und
dadurch, dass es auch einen Schritt des Füllens des geologischen Modells durch die Ausbreitung einer Mini-Oberfläche durch Ähnlichkeit in der Nähe eines jeden Abtastpunktes (5), der eine Verbindung (7) umfasst, indem der besagte Punkt (5) als Keim genommen wird, umfasst.

2. Verfahren nach Anspruch 1, **dadurch gekennzeichnet, dass**:
- die Daten eines seismischen Volumens (1) in einer im Wesentlichen horizontalen Ebene, nämlich in einer Ebene, die parallel zur Oberfläche des Bodens verlaufende Achsen (Inline und Xline) umfasst, abgetastet werden; und zwar nach einem Gitter mit einer der folgenden Formen: quadratischer, hexagonaler oder beliebiger Form; und
- die Spuren (3, 4) eine im Wesentlichen vertikale Ausrichtung haben, das heißt in der Richtung einer in der Richtung der zunehmenden Tiefen orientierten Achse (TWT), und im Wesentlichen ausgerichtete und in gleichen Abständen angeordnete Abtastpunkte (5) umfassen, sie werden nämlich in Tiefen (t1, t2, t3,...) in Richtung der besagten Achse (TWT) abgetastet.

3. Verfahren nach Anspruch 1, **dadurch gekennzeichnet, dass** es einen Schritt der Konstruktion von Abschnitten (10) in dem Korrelationsbild (2) durch Ausbreitung unter Punkten (8), die Korrelationswerten höher als wenigstens ein vorbestimmter Schwellenwert entsprechen, umfasst, welche Segmente (10) Sätzen von Verbindungen oder Korrelationskämmen (11) zwischen Abtastpunkten (5) der Spuren (3, 4) entsprechen.

4. Verfahren nach Anspruch 3, **dadurch gekennzeichnet, dass** es eine Stufe des Auswählens der Segmente (10) des Korrelationsbildes (2) umfasst,
- welche Auswahl höchstens noch ein Segment (10) pro Zeile und pro Spalte des Korrelationsbildes (2) läßt, das einer einzigen Verbindung (7) pro Abtastpunkt (5) entspricht, und
- wobei die Segmente (10) auf der Basis des Wertes der diese letzteren bildenden Punkte (8) und ihrer Länge ausgewählt werden.

5. Verfahren nach Anspruch 4, **dadurch gekennzeichnet, dass** es einen Schritt des Validierens der Verbindungen (7) durch Analyse der Bahnen (30, 31) umfasst, die von den Folgen von durch die besagten Verbindungen (7) verbundenen Punkten (5) gebildet werden, wobei eine Bedingung für die Validierung der Verbindungen (7) ist, dass in einem seismischen Volumen die Bahnen (30) schleifenförmig sind.

6. Verfahren nach Anspruch 5, **dadurch gekennzeichnet, dass** die Schritte des Auswählens der Segmente (10) in dem Korrelationsbild (2) und des Validierens der Verbindungen (7) iterativ auf den verbleibenden Segmenten (41, 42) in dem Korrelationsbild (2) wiederholt werden, wobei als Einschränkung die bei den vorherigen Iterationen validierten Verbindungen (40) verwendet werden, bis keine weitere verwertbare Segmente vorhanden sind.

7. Verfahren nach Anspruch 1, **dadurch gekennzeichnet, dass** es einen Schritt des Normalisierens der relativen Alter umfasst, wobei das Altersinkrement zwischen aufeinanderfolgenden relativen Alterspunkten (5) auf einen vorbestimmten Wert festgelegt ist.

8. Verfahren nach irgendeinem der vorhergehenden Ansprüche, **dadurch gekennzeichnet, dass** ein geologisches Multiskalen-Modell durch Zusammenführung der Sätze von Verbindungen zwischen Abtastpunkten hergestellt wird, welche Sätze von Verbindungen mit unterschiedlichen Abtastgittern erhalten werden.

9. Verfahren nach irgendeinem der vorhergehenden Ansprüche, **dadurch gekennzeichnet, dass** es auf die direkte Extraktion der Ablageflächen auf der Basis von Iso-Werten angewendet wird.

10. Verfahren nach irgendeinem der Ansprüche 1 bis 8, **dadurch gekennzeichnet, dass** es auf die Horizontalisierung der Seismik durch Mappierung in einer Linie oder einer Spalte des einer geologischen Stufe entsprechenden seismischen Signals angewendet wird.

11. Verfahren nach irgendeinem der Ansprüche 1 bis 8, **dadurch gekennzeichnet, dass** es auf die Analyse von Brüchen angewendet wird.

12. Verfahren nach irgendeinem der Ansprüche 1 bis 8, **dadurch gekennzeichnet, dass** es auf die Analyse von Kanälen angewendet wird.

13. Computerprogramm, das alle Schritte des Verfahrens nach irgendeinem der vorhergehenden Ansprüche umsetzt.

## Claims

1. A method for developing a computer-implemented geological model from previously collected seismic data, wherein it comprises steps of:
- sampling said seismic data (1) according to at least one set of seismic traces (3, 4) each formed of sampling points (5) sampled at increasing depths,
- analyzing the similarities between the seismic data (6) around said sampling points (5) belonging to different seismic traces (3, 4),
- determining the links (7) between sampling points (5) belonging to different traces from said analysis of similarities, which links connect points that are located on the same geological surface, said determination comprising a step of calculating correlation images (2):
- each correlation image corresponding to a pair of traces (3, 4),
- each trace being represented according to a dimension of the correlation image (2), and
- the value of each point of the image (2) representing the local correlation of the seismic data (6) in the vicinity of the two respective points (5) of each trace (3, 4);
wherein it comprises a step of:
- forming said geological model by allocating to each sampling point (5) a relative geological age, which is calculated at least from:
(i) the relative geological age of other sampling points connected to said sampling point (5) by links (7), and
(ii) the relative geological age of other sampling points adjacent to the trace (4) including said sampling point (5),
the allocation of a relative geological age to the sampling points (5) is an iterative process performed as long as there remain undated sampling points (5) comprising at least one link (7), which comprises steps of:
- selecting an undated sampling point (5) comprising at least one link (7),
- allocating a relative age to this point (5) taking into consideration the already dated points of its trace (4), so that the age along a trace always varies in the same direction, and
- allocating the same relative age to all the points connected to this point by links (7), and it also comprises a step of filling the geological model by propagation of a mini-surface by similarity in the vicinity of each sampling point (5) comprising a link (7), taking said point (5) as a seed.

2. The method according to claim 1, wherein:
- the data of a seismic volume (1) are sampled in a substantially horizontal plane, namely according to a plane comprising axes (Inline and Xline) parallel to the surface of the ground; according to a meshing having any one of the following shapes: square, hexagonal, even arbitrary shape; and
- the traces (3, 4) have a substantially vertical orientation, namely in the direction of an axis (TWT) oriented in the direction of the increasing depths, and comprise substantially aligned and equidistant sampling points (5), namely since they are sampled at depths (t1, t2, t3,...) in the direction of said axis (TWT).

3. The method according to claim 1, wherein it comprises a step of constructing segments (10) in the correlation image (2) by propagation among points (8) corresponding to correlation values higher than at least a predetermined threshold, which segments (10) correspond to sets of correlation links or combs (11) between sampling points (5) of the traces (3, 4).

4. The method according to claim 3, wherein it comprises a step of selecting segments (10) of the correlation image (2),
- which selection leaves at most one segment (10) per row and per column of the correlation image (2), corresponding to a single link (7) per sampling point (5), and
- the segments (10) being selected based on the value of the points (8) forming them, and their length.

5. The method according to claim 4, wherein it comprises a step of validating the links (7) by analyzing the paths (30, 31) formed by the successions of points (5) connected by said links (7), a condition for the links (7) to be validated being, in a seismic volume, that the paths are in a loop (30).

6. The method according to claim 5, wherein the steps of selecting segments (10) in the correlation image (2) and of validating the links (7) are repeated iteratively on the remaining segments (41, 42) in the correlation image (2), using as a constraint the links validated (40) in the previous iterations, until there are no longer exploitable segments.

7. The method according to claim 1, wherein it comprises a step of normalizing the relative ages, the age increment between points (5) of consecutive relative ages being fixed at a predefined value.

8. The method according to any one of the preceding claims, wherein a multi-scale geological model is developed by merging sets of links between sampling points, which sets of links are obtained with different sampling grids.

9. The method according to any one of the preceding claims, wherein it is applied to the direct extraction of the deposition surfaces based on iso-values.

10. The method according to any one of claims 1 to 8, wherein it is applied to the horizontalization of the seismic by mapping on a line or a plane the seismic signal corresponding to a geological stage.

11. The method according to any one of claims 1 to 8, wherein it is applied to the analysis of faults.

12. The method according to any one of claims 1 to 8, wherein it is applied to the analysis of channels.

13. A computer program implementing all the steps of the method according to any one of the preceding claims.
